# FASCICULE DE BREVET EUROPEEN

(11) **EP 3 545 222 B1**
(45) Date de publication et mention de la délivrance du brevet: **24.02.2021**
(21) Numéro de dépôt: 17811642.2
(22) Date de dépôt: 20.11.2017
(51) Int. Cl.: F16K 31/04, F02D 9/10, H02K 21/14, H02K 1/14

(54) **VANNE DE CIRCULATION D'AIR AVEC MOTOREDUCTEUR**
LUFTZIRKULATIONSVENTIL MIT GETRIEBEMOTOR
AIR CIRCULATION VALVE WITH GEAR MOTOR

(30) Priorité: 24.11.2016 FR 1661430
(43) Date de publication de la demande: 02.10.2019
(73) Titulaire: Moving Magnet Technologies, 25000 Besançon (FR)
(72) Inventeur: EQUOY, Samuel, 25110 BAUME LES DAMES (FR); ANDRIEUX, Gaël, 2533 Evilard (CH)
(74) Mandataire: IP Trust
(86) Numéro de dépôt international: PCT/FR2017/053170
(87) Numéro de publication internationale: WO 2018/096246

(56) Documents cités:
- WO-A2-2009/034270
- FR-A1- 2 994 353
- US-A1- 2006 097 588
- US-A1- 2012 181 641
- US-A1- 2012 313 025
- US-A1- 2014 130 763
- US-B2- 7 591 245

## Description

### DOMAINE TECHNIQUE DE L'INVENTION

L'invention se rapporte à une vanne compacte, notamment destiné à réguler la circulation d'air dans un véhicule automobile. La vanne selon l'invention est associée à un motoréducteur compact, assurant la commande de ladite vanne.

### ETAT DE LA TECHNIQUE ANTERIEURE

**On** connaît la demande de brevet internationale WO2009034270 décrivant un moto-réducteur comportant un moteur électrique polyphasé formé par une partie statorique excitée par des bobines électriques et par un rotor présentant N paires de pôles aimantés radialement en sens alternés, la partie statorique présentant 2 secteurs angulaires alpha-1 et alpha-2, de rayons respectifs R1 et R2, comportant des dents larges et des dents étroites s'étendant radialement depuis une couronne annulaire, caractérisé, en ce que les dents larges présentent une largeur supérieure ou égale au double de la largeur des dents étroites, en ce que la largeur d'encoche est supérieure à la largeur d'une dent étroite, en ce que le secteur angulaire alpha-1 est inférieur à 220° et comporte l'ensemble des bobinages, et en ce que le rapport R1 sur R2 est compris entre 1.2 et 2.

Il est également connu de l'état de l'art des réalisations de vannes formées d'un corps de vanne et d'un motoréducteur, comme par exemple dans la demande de brevet américain US20030178004. Le moteur est à courant continu, volumineux et positionné à côté du corps de vanne. Le train réducteur est placé au-dessus du corps de vanne. L'ensemble réalisé est relativement encombrant mais permet d'utiliser un train d'engrenages réducteur formé d'un seul étage de par les bras de levier importants permis par cette réalisation volumineuse.

Par ailleurs, le brevet américain US7591245 présente une vanne motorisée plus compacte dont le motoréducteur est situé au-dessus du corps de vanne et n'utilisant aussi qu'un seul étage de réduction. Cependant, de par le bras de levier plus court imposé par la réalisation plus compacte en largeur, le moteur sans balai utilisé pour le motoréducteur est relativement volumineux pour fournir un couple généreux, et forme une protubérance au-dessus du corps de vanne qui rend la réalisation peu compacte en hauteur, au-dessus du corps de vanne.

**On** connaît aussi la demande de brevet US20120313025 décrivant une soupape de régulation de fluide dans laquelle une section d'actionneur et un logement de section de soupape, qui présente un passage de fluide, sont conçus séparément, un passage de refroidissement d'eau étant disposé entre la section d'actionneur et le logement de section de soupape. En outre, du côté de la section d'actionneur comprenant le passage de refroidissement d'eau entre la section d'actionneur et le logement de section de soupape, des parties comme un palier, un ressort de rappel et un engrenage qui relie directement la section d'actionneur et la tige de soupape l'une à l'autre sont disposées, qui permettent de protéger l'actionneur du transfert thermique et de la chaleur de rayonnement provenant d'un fluide haute température présent en grande quantité.

### EXPOSE DE L'INVENTION

Le but de l'invention est de proposer une amélioration des réalisations de l'art antérieur en proposant vanne avec motoréducteur particulièrement compacte, bénéficiant d'un moteur sans balai de taille réduite par rapport à l'état de l'art tout en permettant de conserver un étage de réduction unique. L'invention n'est toutefois pas restreinte à l'utilisation d'un étage unique de réduction.

Selon l'invention, ce but concerne la réalisation d'une vanne motorisée présentant ces avantages techniques.

Plus particulièrement l'invention concerne une vanne de circulation d'air motorisée conforme à l'une des revendications ou à une combinaison de ces revendications..

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, une vue en perspective de deux vannes motorisées selon l'invention ;
- la figure 2, une vue de dessus, sans couvercle du motoréducteur, d'une vanne motorisée selon l'invention ;
- la figure 3, une vue en coupe transversale d'une vanne motorisée selon l'invention selon un premier mode de réalisation du train d'engrenages ;
- la figure 4, une vue en coupe transversale d'une vanne motorisée selon l'invention selon un deuxième mode de réalisation du train d'engrenages ;
- les figures 5a et 5b des vues latérales des deux vannes motorisées de la figure 1 ;
- les figures 6a et 6b des vues de dessus des deux vannes motorisées des figures 1, 5a et 5b ;
- les figures 7 et 9 des vues en coupe transversale, respectivement latérale et en perspective éclatée, d'un mode de réalisation particulier d'une vanne selon l'invention ;
- la figure 8 une vue en coupe transversale d'une vanne selon l'invention selon un autre mode particulier,
- les figures 10a et 10b des vues respectivement en perspective et en coupe transversale d'un mode particulier de réalisation d'un motoréducteur sous forme de cassette selon l'invention,
- la figure 11 une vue en perspective isolée d'un moteur électrique et d'un train d'engrenages à renvoi d'angle pouvant être utilisée dans la présente invention,
- les figures 12a et 12b des vues respectivement du dessus et en perspective, d'un motoréducteur selon l'invention comportant trois étages de réduction à engrenages droits.

### DESCRIPTION DETAILLEE D'UN MODE DE REALISATION

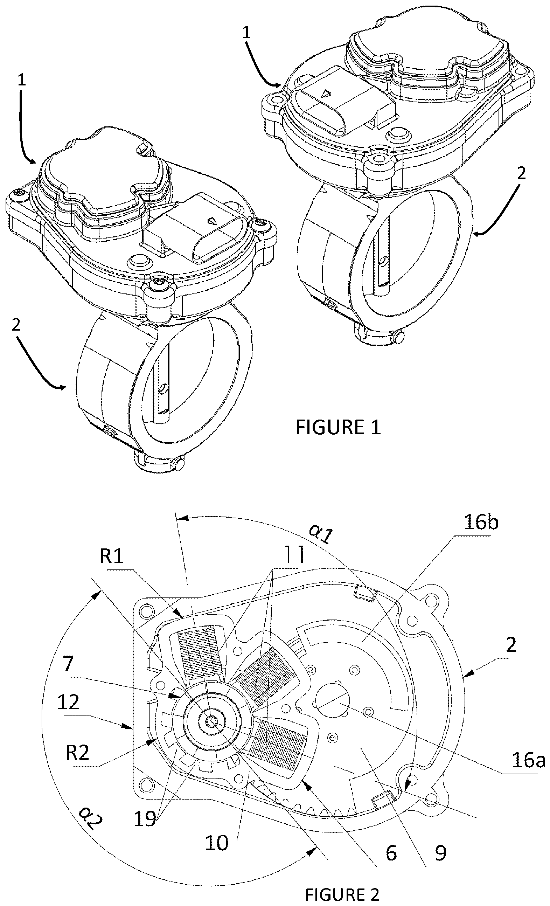

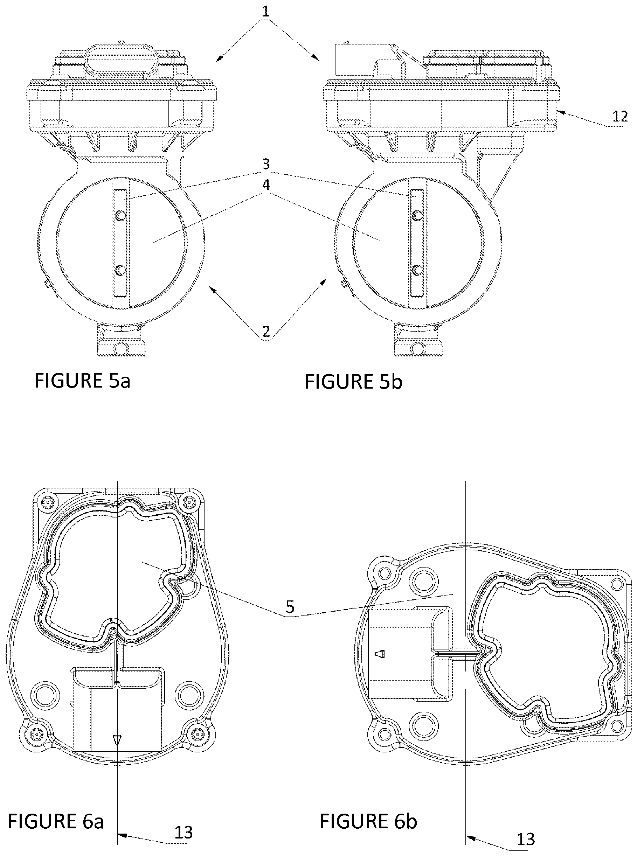

La figure 1 représente une vanne selon l'invention selon deux exemples d'orientation. Elle permet de visualiser la compacité du motoréducteur (1) situé au-dessus du corps de vanne (2) et la grande souplesse de réalisation permise par l'invention. En effet, sur cette figure 1, on apprécie particulièrement l'orientation possible donnée au motoréducteur (1) de par sa compacité en hauteur (épaisseur) et sa localisation entièrement au-dessus du corps de vanne (2). Le motoréducteur (1) peut être orienté suivant sa plus grande longueur selon l'axe du corps de vanne (2), à gauche sur la figure 1, ou perpendiculairement par rapport à cet axe de corps de vanne (2), à droite sur la figure 1, ou bien selon toute orientation angulaire autour de l'axe de corps de vanne (2). L'axe de corps de vanne, ou axe de conduit (13), est visualisé en figures 6a et 6b pour une meilleure compréhension.

La figure 2 illustre l'intégration suivant la présente invention d'un motoréducteur (1) composé d'un moteur électrique sans balai (6) et d'un étage d'engrenages, vu de dessus sans couvercle.

Ces éléments s'inscrivent dans une empreinte définie par le corps de vanne (2), le moteur électrique (6) étant placé au plus proche du flanc (12) du corps de vanne (2), le flanc (12) délimitant une extrémité du motoréducteur (1).

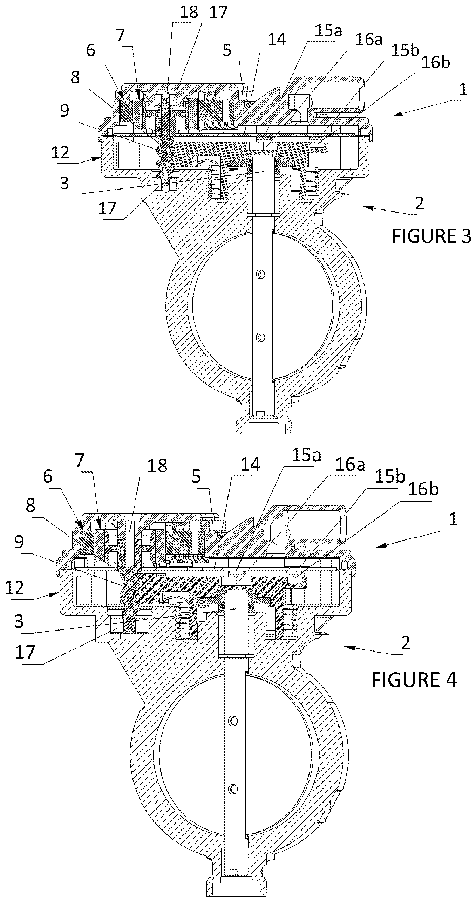

La figure 2 illustre l'utilisation particulière du moteur électrique (6), qui est semblable au moteur décrit dans la demande de brevet WO2009034270 mais utilisé ici de manière inattendue. En effet, le moteur (6) est positionné par rapport au train d'engrenages réducteur de manière à ce que les bobines (11) de la partie statorique (10) soient installées au-dessus de la roue de sortie (9). Cette configuration inédite permet de maximiser le rapport de réduction en réduisant la distance entre l'axe de rotation du rotor (7) et le flanc (12) du motoréducteur (1) et donc en maximisant l'entraxe entre le pignon (8), visible en figures 3 et 4, solidaire du rotor (7), et la roue de sortie (9), favorisant ainsi l'utilisation d'un seul étage de réduction tout en permettant une multiplication de couple apte à l'obturation du corps de vanne (2).

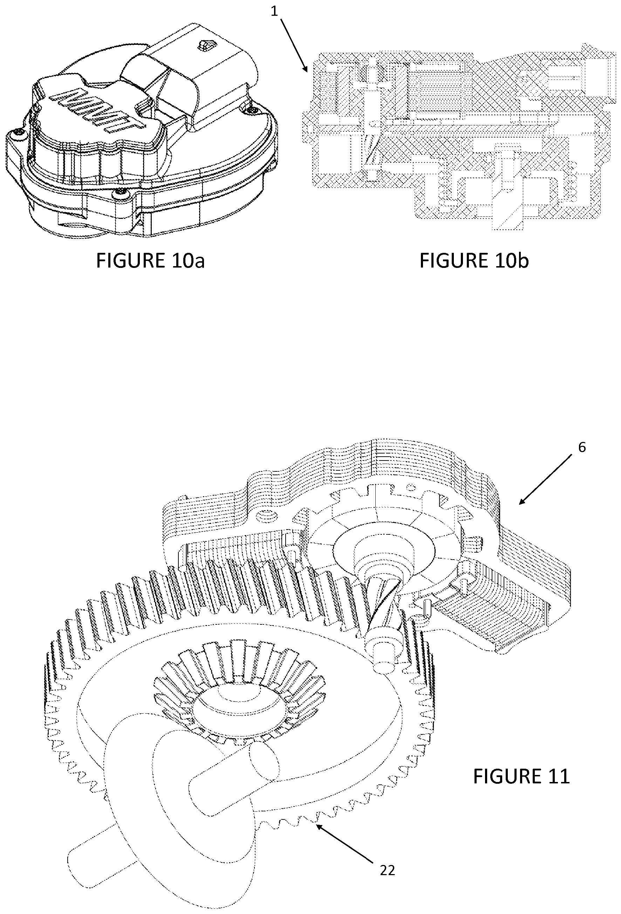

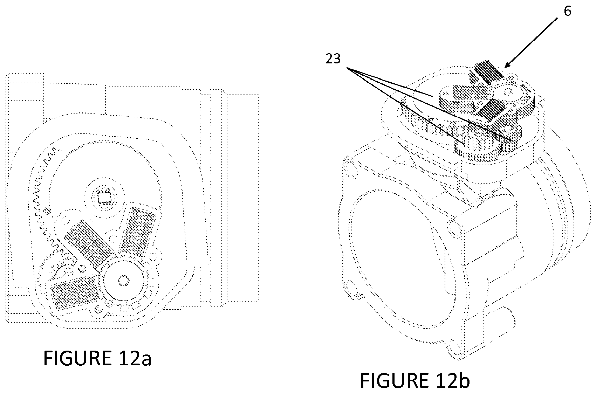

Il est précisé que, bien que l'invention peut particulièrement être mise en valeur pour une réalisation comportant un seul étage de réduction, il est possible, en respectant l'invention, de réaliser un motoréducteur comportant plus d'un étage de réduction, par exemple deux étages, comme illustré en figure 11, ou encore par exemple trois étages de réduction, comme illustré en figures 12a et 12b. L'exemple de la figure 11 propose l'utilisation d'un renvoi d'angle (22). L'exemple des figures 12a et 12b propose l'utilisation de trois étages de réduction sous la forme d'engrenages (23) droits à dentures droites.

La configuration du moteur (6) est telle qu'il comprend deux principales zones délimitées par les secteurs angulaires α1 (alpha1) et a2 (alpha2). Le secteur angulaire α1 est celui comprenant les bobines électriques (11) du moteur (6), le secteur étant délimité par l'axe de bobinage des première et dernière bobines (11), comptées de manière circonférentielle autour de l'axe de rotation du rotor (7). Cette zone délimitée par le secteur angulaire α1 présente un rayon R1, qui est le rayon le plus grand du moteur (6).

Il est à noter que le nombre de bobines n'est pas limité à l'exemple du brevet qui considère un moteur triphasé avec trois bobines. Il peut par exemple être envisagé d'utiliser, selon l'invention, un moteur diphasé présentant deux bobines.

La zone délimitée par le secteur angulaire α2 présente globalement un rayon R2 plus petit que le rayon R1. La distance entre R2 et l'axe de rotation du rotor (7) est ainsi minimisée, principalement définie par le rayon interne de l'aimant du rotor (6), le jeu mécanique entre rotor (7) et partie statorique (10) et épaisseur des dents, ou pôles (19) non bobinés de la partie statorique (10) et du fond de cette dernière. En étant positionnée au plus près du flanc (12), la zone délimitée par le secteur angulaire a2 permet ainsi de minimiser la distance entre l'axe de rotation du rotor (7) et ce flanc (12). Cela amène à la maximisation de la distance entre l'axe de rotation du rotor (7) et l'axe de rotation (3) de l'obturateur (4) du corps de vanne (2). La partie statorique (10) peut présenter des dents (19) de largeur variée selon les besoins de couple sans et avec courant demandés par l'application, mais préférentiellement elle comporte des dents larges et des dents étroites respectivement s'étendant radialement depuis une couronne annulaire, les dents larges présentant une largeur supérieure ou égale au double de la largeur des dents étroites.

Il est illustré en figures 3 et 4, un motoréducteur (1) composé d'un étage de réduction à denture hélicoïdale - le pignon (8) - dont la valeur de l'angle d'hélice au cercle primitif peut évoluer. En figure 3, la denture hélicoïdale présente un angle d'hélice au cercle primitif de 40° et en figure 4 la denture hélicoïdale présente un angle d'hélice au cercle primitif de 25°. L'utilisation d'une denture hélicoïdale autorise l'utilisation d'un pignon (8) à nombre de dents réduit permettant ainsi d'accroitre le rapport d'engrènement. Afin de minimiser les efforts axiaux engendrés, il s'avère pertinent de réduire l'angle d'hélice au cercle primitif.

La partie externe du motoréducteur (1) est formée d'une part par le prolongement du corps de vanne (2) et d'autre part par un couvercle (5), ces deux parties formant un boitier hermétique. Il est à noter qu'il est possible d'envisager un boitier formé de deux parties distinctes découplées du corps de vanne (2). Ainsi, le motoréducteur forme une unité ou une cassette, comme présentée en figures 10a et 10b, qui peut être entièrement montée puis rapportée sur le corps de vanne (2).

Est représenté sur la vue en coupe de la figure 3 un guidage en rotation réalisé par le biais de deux paliers (17) type roulements à billes répartis de part et d'autre de l'axe du rotor (7).

Il est également possible d'utiliser d'autres formes de palier comme par exemple un palier (17) lisse avec un axe de guidage (18) planté dans le couvercle (5) guidant le rotor (7) comme représenté sur la figure 4.

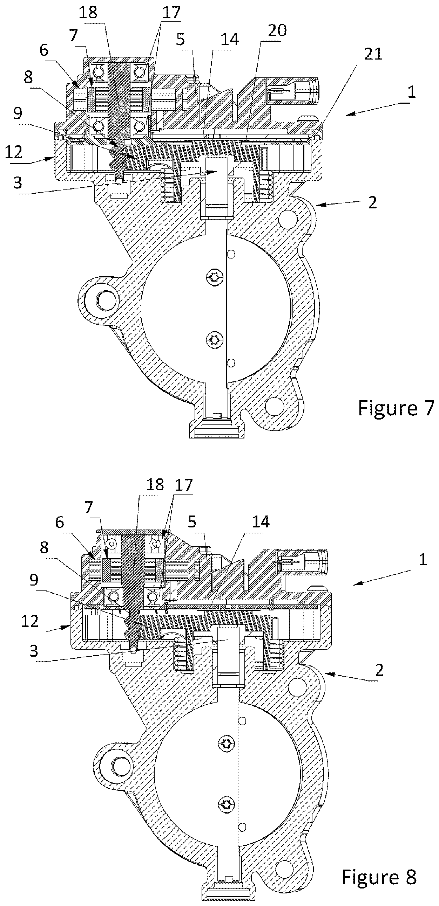

De manière alternative, comme présenté en figure 8, le motoréducteur (1) peut présenter un couvercle (5) qui comprend les roulements (17) afin de bénéficier d'un ensemble motoréducteur (1) autonome venant se positionner sur le corps de vanne (2). Les roulements (17) sont par exemple surmoulés dans le couvercle (5).

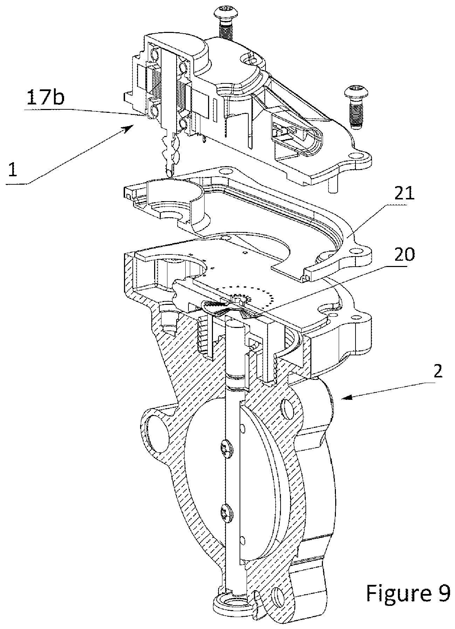

Dans une autre alternative, comme montrée en figures 7 et 9, une plaque intermédiaire (21), se positionnant entre le motoréducteur (1) et le corps de vanne (2), est utilisée pour supporter notamment le roulement inférieur (17b), montré en figure 9 pré-positionné sur l'axe (3) du motoréducteur (1).

En figure 4 est illustrée la partie statorique (10) intégrée au couvercle (5) et le circuit imprimé (14) rapporté au moteur électrique (6) permettant ainsi l'alimentation électrique dudit moteur électrique (6) par le biais de connexion électrique (par exemple par soudure ou connexion de type press-fit).

Le circuit imprimé (14) supporte un circuit de commande électronique qui permet de piloter le moteur électrique (6) et d'asservir en position la vanne de circulation d'air par le biais d'un retour d'information quant à la position de l'obturateur (4).

Cette information de position est illustrée sur les figures 3 et 4 par une sonde magnétosensible (15a) réalisant la lecture du champ magnétique émis par un aimant de capteur bout d'axe (16a). Il s'agit d'une version dite « capteur bout d'axe ».

Une deuxième version de lecture de champ magnétique faisant office de codeur est représentée sur les figures 3 et 4 par le biais de l'association d'une sonde magnétosensible (15b) et d'un aimant de capteur sous la forme d'un secteur (16b). il s'agit d'une version dite « capteur off-axis ».

L'utilisation conjointe des deux types de détection décrits n'est pas impérative et un seul capteur peut être utilisé.

Ce principe de détection n'est pas limitatif, d'autres types de capteur peuvent être envisagés comme des capteurs ayant une lecture de champ magnétique par magnétorésistance ou présentant une variation d'inductance (capteur inductif) ou encore des capteurs de type potentiométrique.

Par exemple, en figures 7 et 9 est montré un capteur de type inductif utilisant un réseau de bobines (20).

Les figures 5a et 6a illustrent le motoréducteur (1) dans l'alignement de l'axe du conduit (13) c'est-à-dire ayant le vecteur normal au flanc (12) parallèle à l'axe du conduit (13).

Les figures 5b et 6b illustrent le motoréducteur (1) orienté perpendiculairement à l'illustration des figures 5a et 6a, le vecteur normal au flanc (12) perpendiculaire à l'axe de conduit (13).

Les figures 5a, 5b, 6a et 6b illustrent la possibilité d'orienter angulairement le système motoréducteur autour de l'axe rotatif (3). Cette mobilité permet, suivant les cas, d'orienter au mieux le motoréducteur (1) afin de maximiser l'espace disponible pour les éléments extérieurs tels que les câbles de connexion, les conduites d'air, les radiateurs, ..., avec lesquels l'actionneur doit cohabiter.

L'orientation étant adaptable, l'angle entre le vecteur normal au flanc (12) et l'axe de conduit (13) peut être défini en fonction du besoin.

## Revendications

1. Vanne de circulation d'air motorisée comprenant un motoréducteur (1), un corps de vanne (2), un axe rotatif (3) muni d'un obturateur (4), ledit axe rotatif (3) étant déplacé en rotation par ledit motoréducteur (1), ledit motoréducteur (1) comprenant un train d'engrenages réducteur, un moteur électrique (6) formé d'un rotor (7) présentant N paires de pôles aimantés liées à un pignon (8) dudit train d'engrenages réducteur, ledit pignon (8) entrainant une roue de sortie (9) solidaire dudit axe rotatif (3) **caractérisée en ce que** le moteur électrique (6) est un moteur sans balai et comprend une partie statorique (10) présentant au moins deux bobines (11), ladite partie statorique (10) présentant 2 secteurs angulaires alpha1 et alpha2, de rayons respectifs R1 et R2, avec R1 supérieur à R2, le centre des rayons et les secteurs angulaires étant définis relativement au centre de rotation du rotor (7), le secteur angulaire alpha1 étant défini par l'écart angulaire entre les axes des premières et dernières bobines (11) considérées selon un sens circonférentiel du moteur, **en ce que** le secteur angulaire alpha1 est inférieur à 180° et comporte lesdites bobines, le secteur alpha2 étant dépourvu de bobine entièrement inscrite, **en ce qu'**une extrémité du motoréducteur (1) définit un flanc (12) du motoréducteur (1) et **en ce que** le secteur angulaire alpha2 de la partie statorique est positionné en regard du flanc (12), **en ce qu'**un circuit imprimé (14) est rapporté au moteur électrique, et positionné entre le moteur et le train d'engrenages réducteur.

2. Vanne de circulation d'air motorisée selon la revendication 1 **caractérisée en ce que** ledit pignon (8) dudit motoréducteur engrène directement la roue de sortie (9), ledit motoréducteur (1) présentant un seul étage de réduction.

3. Vanne de circulation d'air motorisée selon la revendication 1 **caractérisée en ce que** ladite partie statorique (10) comporte des dents larges et des dents étroites respectivement s'étendant radialement depuis une couronne annulaire, les dents larges présentant une largeur supérieure ou égale au double de la largeur des dents étroites.

4. Vanne de circulation d'air motorisée selon la revendication 1 **caractérisée en ce que** le pignon (8) est de forme hélicoïdale.

5. Vanne de circulation d'air motorisée selon la revendication 1 **caractérisée en ce que** le moteur (6) est connecté électriquement sur le circuit imprimé (14) et **en ce qu'**une sonde magnétosensible (15a) est placée sur ledit circuit imprimé (14), ledit axe rotatif (3) étant solidaire d'un aimant de capteur (16a) positionné en bout d'axe (3) et en regard de ladite sonde magnétosensible (15).

6. Vanne de circulation d'air motorisée selon la revendication 1 **caractérisée en ce que** le moteur (6) est connecté électriquement sur le circuit imprimé (14) et **en ce qu'**une sonde magnétosensible (15b) est placée sur ledit circuit imprimé (14), ledit axe rotatif (3) étant solidaire d'un aimant de capteur (16b) sous la forme d'un secteur angulaire tournant en périphérie de l'axe (3) et positionné en regard de ladite sonde magnétosensible (15).

7. Vanne de circulation d'air motorisée selon la revendication 6 **caractérisée en ce que** l'aimant de capteur (16b) est positionné radialement par rapport à l'axe (3), à l'opposé du moteur électrique (6).

8. Vanne de circulation d'air motorisée selon la revendication 1 **caractérisée en ce que** ledit train d'engrenages réducteur comporte deux étages.

9. Vanne de circulation d'air motorisée selon la revendication précédente **caractérisée en ce que** le motoréducteur (1) est situé au-dessus de l'obturateur (4), **en ce que** le corps de vanne (2) définit un axe de conduit (13) et **en ce que** la plus grande dimension dudit motoréducteur (1) est orientée sensiblement parallèlement à l'axe de conduit (13).

10. Vanne de circulation d'air motorisée selon la revendication 9 **caractérisée en ce que** le motoréducteur (1) est situé au-dessus de l'obturateur (4), **en ce que** le corps de vanne (2) définit un axe de conduit (13) et **en ce que** la plus grande dimension dudit motoréducteur (1) est orientée sensiblement perpendiculairement à l'axe de conduit (13).

11. Vanne de circulation d'air motorisée selon la revendication 9 **caractérisée en ce que** ledit motoréducteur (1) est formé par un prolongement du corps de vanne (2) d'une part et d'un couvercle (5) d'autre part.

## Patentansprüche

1. Motorisiertes Luftumwälzventil, umfassend einen Getriebemotor (1), einen Ventilkörper (2), eine Drehachse (3), die mit einem Verschluss (4) versehen ist, wobei die Drehachse (3) von dem Getriebemotor gedreht wird (1), wobei der Getriebemotor (1) einen Untersetzungsgetriebezug, einen Elektromotor (6), der aus einem Rotor (7) mit N Magnetpolpaaren besteht, die mit einem Ritzel (8) des Untersetzungsgetriebezugs verbunden sind, wobei das Ritzel (8) ein mit der Drehachse (3) einstückig verbundenes Abtriebsrad (9) antreibt, umfasst, **dadurch gekennzeichnet, dass** der Elektromotor (6) ein bürstenloser Motor ist und einen Statorteil (10) mit mindestens zwei Spulen (11) umfasst, wobei der Statorteil (10) zwei Winkelsektoren alphal und alpha2 mit den jeweiligen Radien R1 und R2 aufweist, wobei R1 größer als R2 ist, wobei das Zentrum der Radien und die Winkelsektoren relativ zum Rotationszentrum des Rotors (7) definiert sind, wobei der Winkelsektor alphal durch die Winkeldifferenz zwischen den Achsen der ersten und letzten Spulen (11) definiert ist, gesehen in einer Umfangsrichtung des Motors; dass der Winkelsektor alpha1 kleiner als 180° ist und die Spulen umfasst, wobei der Sektor alpha2 keine vollständig beschriftete Spule aufweist; dass ein Ende des Getriebemotors (1) eine Flanke (12) des Getriebemotors (1) definiert und dass der Winkelsektor alpha2 des Statorteils der Flanke (12) zugewandt positioniert ist; dass eine gedruckte Schaltung am Elektromotor angebracht ist und zwischen dem Motor und dem Untersetzungsgetriebezug positioniert ist.

2. Motorisiertes Luftumwälzventil nach Anspruch 1, **dadurch gekennzeichnet, dass** das Ritzel (8) des Getriebemotors direkt mit dem Abtriebsrad (9) in Eingriff steht, wobei der Getriebemotor (1) eine einzige Untersetzungsstufe aufweist.

3. Motorisiertes Luftumwälzventil nach Anspruch 1, **dadurch gekennzeichnet, dass** der Statorteil (10) jeweils breite Zähne und schmale Zähne aufweist, die sich radial von einem ringförmigen Kranz aus erstrecken, wobei die breiten Zähne eine Breite aufweisen, die größer oder gleich zweimal die Breite der schmalen Zähne ist.

4. Motorisiertes Luftumwälzventil nach Anspruch 1, **dadurch gekennzeichnet, dass** das Ritzel (8) spiralförmig ist.

5. Motorisiertes Luftumwälzventil nach Anspruch 1, **dadurch gekennzeichnet, dass** der Motor (6) elektrisch mit der gedruckten Schaltung (14) verbunden ist und dass eine magnetosensitive Sonde (15a) auf der gedruckten Schaltung (14) angeordnet ist, wobei die Drehachse (3) einstückig mit einem Sensormagneten (16a) ist, der am Ende der Achse (3) und der magnetosensitiven Sonde (15) zugewandt positioniert ist.

6. Motorisiertes Luftumwälzventil nach Anspruch 1, **dadurch gekennzeichnet, dass** der Motor (6) elektrisch mit der gedruckten Schaltung (14) verbunden ist und dass eine magnetosensitive Sonde (15b) auf der gedruckten Schaltung (14) angeordnet ist, wobei die Drehachse (3) mit einem Sensormagneten (16b) in Form eines Winkelsektors, der sich am Umfang der Achse (3) dreht, einstückig ist und der magnetosensitiven Sonde (15) zugewandt positioniert ist.

7. Motorisiertes Luftumwälzventil nach Anspruch 6, **dadurch gekennzeichnet, dass** der Sensormagnet (16b) radial zur Achse (3), gegenüber dem Elektromotor (6) positioniert ist.

8. Motorisiertes Luftumwälzventil nach Anspruch 1, **dadurch gekennzeichnet, dass** der Untersetzungsgetriebezug zwei Stufen umfasst.

9. Motorisiertes Luftumwälzventil nach dem vorhergehenden Anspruch, **dadurch gekennzeichnet, dass** sich der Getriebemotor (1) über dem Verschluss (4) befindet, dass der Ventilkörper (2) eine Kanalachse (13) definiert und dass die größte Abmessung des Getriebemotors (1) im Wesentlichen parallel zur Kanalachse (13) ausgerichtet ist.

10. Motorisiertes Luftumwälzventil nach Anspruch 9, **dadurch gekennzeichnet, dass** sich der Getriebemotor (1) über dem Verschluss (4) befindet, dass der Ventilkörper (2) eine Kanalachse (13) definiert und dass die größte Abmessung des Getriebemotors (1) im Wesentlichen senkrecht zur Kanalachse (13) ausgerichtet ist.

11. Motorisiertes Luftumwälzventil nach Anspruch 9, **dadurch gekennzeichnet, dass** der Getriebemotor (1) einerseits durch eine Verlängerung des Ventilkörpers (2) und andererseits durch eine Abdeckung (5) ausgebildet ist.

## Claims

1. Motorized air circulation valve comprising a gear motor (1), a valve body (2), a rotary shaft (3) provided with a shutter (4), said rotary shaft (3) being rotated by said gear motor (1), said gear motor (1) comprising a reduction gear train, an electric motor (6) formed by a rotor (7) having N pairs of magnetic poles linked to a pinion (8) of said reduction gear train, and said pinion (8) driving an output wheel (9) rigidly connected to said rotary shaft (3), **characterized in that** the electric motor (6) is a brushless motor and comprises a stator part (10) having at least two coils (11), said stator part (10) having 2 angular sectors alpha1 and alpha2, which have radii R1 and R2, respectively, with R1 being greater than R2, the center of the radii and angular sectors being defined relative to the center of rotation of the rotor (7), the angular sector alpha1 being defined by the angular distance between the axes of the first and last coils (11) viewed in a circumferential direction of the motor; **in that** the angular sector alpha1 is less than 180° and comprises said coils, there being no coils contained entirely within the sector alpha2; **in that** one end of the gear motor (1) defines a flank (12) of the gear motor (1); and **in that** the angular sector alpha2 of the stator part is positioned facing the flank (12); **in that** a printed circuit is attached to the electric motor, and positioned between the motor and the reduction gear train.

2. Motorized air circulation valve according to claim 1, **characterized in that** said pinion (8) of said gear motor meshes directly with the output wheel (9), said gear motor (1) having a single reduction stage.

3. Motorized air circulation valve according to claim 1, **characterized in that** said stator part (10) comprises wide teeth and narrow teeth extending radially from an annular ring, the wide teeth having a width greater than or equal to twice the width of the narrow teeth.

4. Motorized air circulation valve according to claim 1, **characterized in that** the pinion (8) is helical.

5. Motorized air circulation valve according to claim 1, **characterized in that** the motor (6) is electrically connected to the printed circuit (14), and **in that** a magnetosensitive probe (15a) is placed on said printed circuit (14), said rotary shaft (3) being rigidly connected to a sensor magnet (16a) which is positioned at the end of the shaft (3) and faces said magnetosensitive probe (15).

6. Motorized air circulation valve according to claim 1, **characterized in that** the motor (6) is electrically connected to the printed circuit (14), and **in that** a magnetosensitive probe (15b) is placed on said printed circuit (14), said rotary shaft (3) being rigidly connected to a sensor magnet (16b) in the form of an angular sector which rotates on the periphery of the shaft (3) and is positioned opposite said magnetosensitive probe (15).

7. Motorized air circulation valve according to claim 6, **characterized in that** the sensor magnet (16b) is positioned radially with respect to the shaft (3), opposite the electric motor (6).

8. Motorized air circulation valve according to claim 1, **characterized in that** said reduction gear train has two stages.

9. Motorized air circulation valve according to the preceding claim, **characterized in that** the gear motor (1) is located above the shutter (4), **in that** the valve body (2) defines a channel axis (13), and **in that** the largest dimension of said gear motor (1) is oriented substantially parallel to the channel axis (13).

10. Motorized air circulation valve according to claim 9, **characterized in that** the gear motor (1) is located above the shutter (4), **in that** the valve body (2) defines a channel axis (13), and **in that** the largest dimension of said gear motor (1) is oriented substantially perpendicular to the channel axis (13).

11. Motorized air circulation valve according to claim 9, **characterized in that** said gear motor (1) is formed by an extension of the valve body (2), and a cover (5).
